# EUROPÄISCHE PATENTANMELDUNG

(11) **EP 4 851 021 A1**
(43) Veröffentlichungstag der Anmeldung: **09.12.2026**
(21) Anmeldenummer: 25180201.3
(22) Anmeldetag: 02.06.2025
(51) Int. Cl.: B62D 25/16, B62D 25/18

(54) **SCHMUTZFÄNGER FÜR EINEN KOTFLÜGEL EINES LANDWIRTSCHAFTLICHEN TRAKTORS**

(71) Anmelder: Deere & Company, Moline, IL 61265 (US)
(72) Erfinder: UPASANI, KAUSTUBH, 68163 Mannheim (DE); KAHNERT, THOMAS, 68163 Mannheim (DE)
(74) Vertreter: Dehnhardt, Florian Christopher

(57) **Zusammenfassung**

Die Erfindung betrifft einen Schmutzfänger (14) für einen Kotflügel (12) eines landwirtschaftlichen Traktors (10), umfassend ein aus einem flexiblen Material hergestelltes Schmutzfängerelement (22, 24) mit einem daran ausgeformten Keder (34, 36) zur Aufnahme in einer an einem umgebenden Radkasten (38) angebrachten Kederschiene (40, 42).

## Beschreibung

Die Erfindung betrifft einen Schmutzfänger für einen Kotflügel eines landwirtschaftlichen Traktors.

Derartige Schmutzfänger sind üblicherweise entlang einer unteren Umrandung eines Kotflügels im Bereich eines Hinterrads des landwirtschaftlichen Traktors angebracht, um einen zusätzlichen Schutz vor fahrtbedingt umherfliegenden Reifenanhaftungen und dergleichen zu bieten. Eine bei landwirtschaftlichen Traktoren des Herstellers John Deere übliche Ausgestaltung sieht die Verwendung von an gelochten Blechhaltern fest angebrachten EPDM-Gummiplatten vor. Durch Lösen einer durch die Lochung hindurchgeführten Verschraubung lassen sich diese bei Bedarf austauschen bzw. zum Zwecke der Reinigung des zwischen Hinterrad und angrenzender Fahrzeugstruktur verlaufenden Hinterachsbereichs abnehmen. Um die Verschraubung lösen zu können, ist zunächst das Hinterrad zu demontieren. Dies ist umständlich, sodass eine regelmäßige Reinigung der Hinterachse erschwert wird. Auch sind die verwendeten Schmutzfänger aufgrund ihrer aufwändigen Bauweise verhältnismäßig teuer in der Herstellung.

Aufgabe der vorliegenden Erfindung ist es daher, einen kostengünstigen Schmutzfänger der eingangs genannten Art anzugeben, der sich mit geringem Aufwand ein- und ausbauen lässt.

Diese Aufgabe wird durch einen Schmutzfänger für einen Kotflügel eines landwirtschaftlichen Traktors gelöst.

Der erfindungsgemäße Schmutzfänger für einen Kotflügel eines landwirtschaftlichen Traktors umfasst ein aus einem flexiblen Material hergestelltes Schmutzfängerelement mit einem daran ausgeformten Keder zur Aufnahme in einer an einem umgebenden Radkasten angebrachten Keder- bzw. Klemmschiene.

Der Keder lässt sich aus der Kederschiene herausziehen, was es möglich macht, den damit ausgestatteten Schmutzfänger selbst unter beengten Bedingungen rasch und unkompliziert von Hand aus- und (wieder) einzubauen. Eine vorherige Demontage eines angrenzenden Hinterrads erübrigt sich somit.

Die Kederschiene besteht beispielsweise aus beschichtetem Stahl oder faserverstärktem Kunststoff und bildet gemeinsam mit dem darin aufgenommenen Schmutzfänger eine im Bereich eines jeweiligen Radkastens einer Hinterachse des landwirtschaftlichen Traktors befestigbare Schmutzfängeranordnung. Die Kederschiene kann innerhalb des Radkastens an geeigneter Stelle angenietet oder angeschraubt sein. Die so gebildete Schmutzfängeranordnung ist zudem kostengünstig in der Herstellung.

Vorteilhafte Weiterbildungen des erfindungsgemäßen Schmutzfängers gehen aus den Unteransprüchen hervor.

Bevorzugt handelt es sich bei dem flexiblen Material um eine gegenüber widrigen Umweltbedingungen unempfindliche Gummi- oder Kunststoffmischung. Die Shore-Härte des flexiblen Materials wird derart gewählt, dass sich der Keder problemlos von Hand in die Kederschiene einführen bzw. herausziehen lässt, aber dennoch ein ungewolltes Lösen der zwischen Klemmverbindung unter der Wirkung fahrtbedingter Bewegungen bzw. Vibrationen ausgeschlossen ist.

Des Weiteren kann der Keder einstückig insbesondere als in einem Randbereich verlaufender Wulst am Schmutzfängerelement ausgeformt sein. Im Gegensatz zu einem mehrteiligen Aufbau lässt sich der Schmutzfänger so besonders einfach bzw. kostengünstig herstellen. Hierbei weist die Kederschiene einen mit Form des Wulstes korrespondierenden Innenquerschnitt auf.

Das von dem Schmutzfänger umfasste Schmutzfängerelement kann mindestens eine Öffnung zur Ineingriffnahme eines mit dem Radkasten verbindbaren Sicherungselements aufweisen. Bei dem wenigstens einen Sicherungselement handelt es sich beispielsweise um eine in einem gut zugänglichen Bereich des Radkastens angeordnete Verschraubung. Hierdurch ist eine zusätzliche mechanische Sicherung des Schmutzfängers am Radkasten möglich.

Der erfindungsgemäße Schmutzfänger für einen Kotflügel eines landwirtschaftlichen Traktors wird im Folgenden anhand der beigefügten Zeichnungen näher erläutert. Dabei sind identische oder bezüglich ihrer Funktion vergleichbare Komponenten mit übereinstimmenden Bezugszeichen versehen. Es zeigt:
- Fig. 1: ein Ausführungsbeispiel des erfindungsgemäßen Schmutzfängers für einen Kotflügel eines landwirtschaftlichen Traktors in eingebautem Zustand, und
- Fig. 2: das in Fig. 1 wiedergegebene Ausführungsbeispiel des erfindungsgemäßen Schmutzfängers in ausgebautem Zustand.

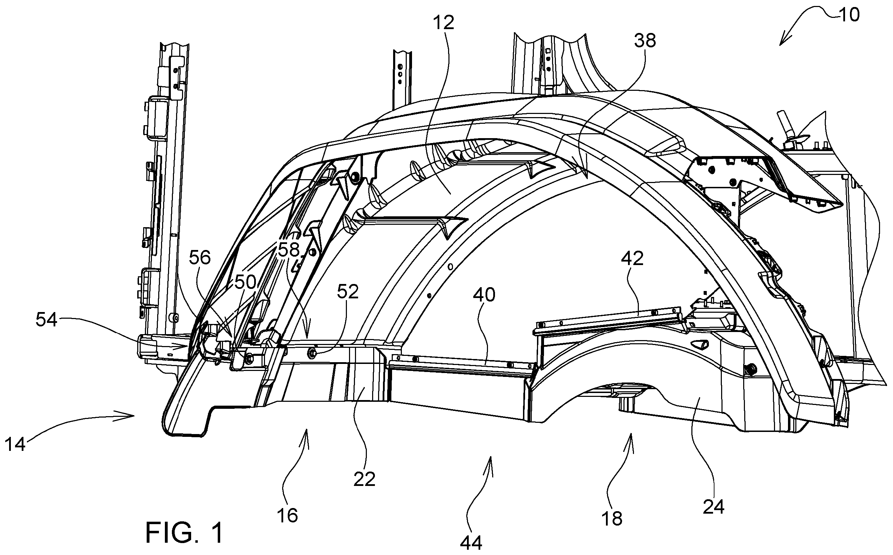

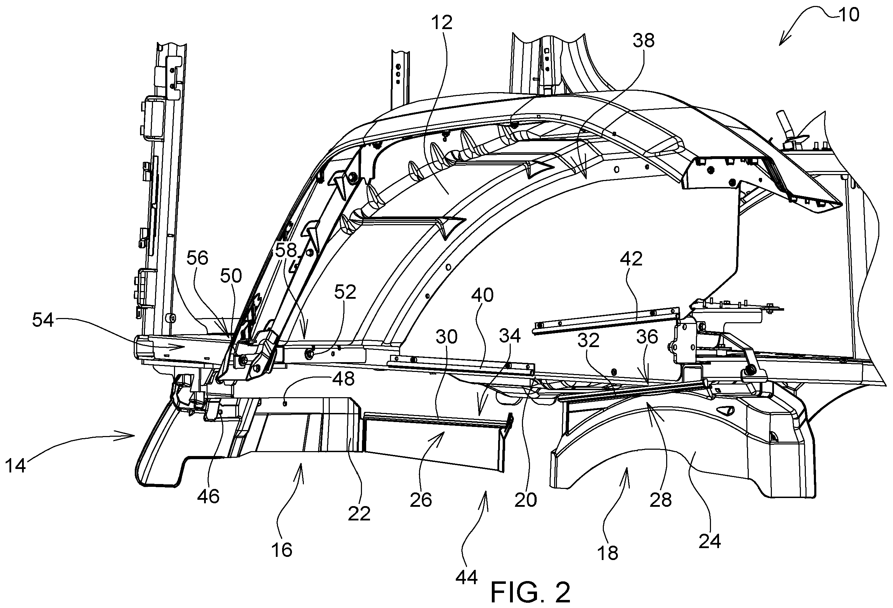

Fig. 1 bzw. 2 zeigt ein Ausführungsbeispiel des erfindungsgemäßen Schmutzfängers für einen Kotflügel eines landwirtschaftlichen Traktors in ein- bzw. ausgebautem Zustand.

Dargestellt ist der auf der linken Seite des landwirtschaftlichen Traktors 10 befindliche Kotflügel 12 bzw. Schmutzfänger 14. Der auf der rechten Seite angeordnete Kotflügel bzw. Schmutzfänger weist einen bezüglich der Längsachse des landwirtschaftlichen Traktors 10 symmetrischen Aufbau auf.

Beispielsgemäß ist der an einer Hinterachse des landwirtschaftlichen Traktors 10 vorgesehene Schmutzfänger 14 aus Gründen der besseren Handhabbarkeit in erste und zweite Schmutzfängersegmente 16, 18 unterteilt. Die beiden Schmutzfängersegmente 16, 18 sind entlang einer unteren Umrandung 20 des Kotflügels 12 im Bereich eines (vorliegend demontierten) Hinterrads des landwirtschaftlichen Traktors 10 angebracht, um einen zusätzlichen Schutz vor fahrtbedingt umherfliegenden Reifenanhaftungen und dergleichen zu bieten.

Jedes der Schmutzfängersegmente 16, 18 umfasst ein aus einem flexiblen Material hergestelltes Schmutzfängerelement 22, 24 mit einem daran als in einem Randbereich 26, 28 verlaufenden Wulst 30, 32 ausgeformten Keder 34, 36 zur Aufnahme in einer an einem umgebenden Radkasten 38 angebrachten Kederschiene 40, 42, die einen mit Form des Wulstes 30, 32 korrespondierenden Innenquerschnitt aufweist.

Bei dem flexiblen Material handelt es sich um eine Gummi- oder Kunststoffmischung. Die Shore-Härte des flexiblen Materials wird derart gewählt, dass sich der Keder 34, 36 problemlos von Hand in die Kederschiene 40, 42 einführen bzw. herausziehen lässt, aber dennoch ein ungewolltes Lösen der Klemmverbindung unter der Wirkung fahrtbedingter Bewegungen bzw. Vibrationen ausgeschlossen ist. Der Keder 34, 36 ist einstückig am Schmutzfängerelement 22, 24 ausgeformt.

Wie durch Vergleich von Fig. 1 und 2 zu erkennen ist, lässt sich der Keder 34, 36 aus der Kederschiene 40, 42 nach unten herausziehen, was es möglich macht, jedes der beiden Schmutzfängersegmente 16, 18 selbst unter beengten Bedingungen rasch und unkompliziert von Hand aus- und (wieder) einzubauen.

Die Kederschienen 40, 42 bestehen aus beschichtetem Stahl oder faserverstärktem Kunststoff und bilden gemeinsam mit den darin aufgenommenen Schmutzfängersegmenten 22, 24 eine im Bereich des Radkastens 38 befestigte Schmutzfängeranordnung 44. Die Kederschienen 40, 42 sind innerhalb des Radkastens 38 angenietet oder angeschraubt.

Zumindest das erste Schmutzfängersegment 16 weist im Bereich des zugehörigen Schmutzfängerelements 22 erste und zweite Öffnungen 46, 48 zur jeweiligen Ineingriffnahme eines mit dem Radkasten 38 verbindbaren Sicherungselements 50, 52 auf. Bei dem Sicherungselement 50, 52 handelt es sich um eine in einem vorderen Bereich 54 des Radkastens 38 angeordnete Verschraubung 56, 58. Hierdurch ist eine zusätzliche mechanische Sicherung des ersten Schmutzfängersegments 16 am Radkasten 38 möglich.

## Patentansprüche

1. Schmutzfänger für einen Kotflügel eines landwirtschaftlichen Traktors, umfassend ein aus einem flexiblen Material hergestelltes Schmutzfängerelement (22, 24) mit einem daran ausgeformten Keder (34, 36) zur Aufnahme in einer an einem umgebenden Radkasten (38) angebrachten Kederschiene (40, 42).

2. Schmutzfänger nach Anspruch 1, **dadurch gekennzeichnet, dass** es sich bei dem flexiblen Material des Schmutzfängerelements (22, 24) um eine Gummi- oder Kunststoffmischung handelt.

3. Schmutzfänger nach Anspruch 1 oder 2, **dadurch gekennzeichnet, dass** der Keder (34, 36) einstückig insbesondere als in einem Randbereich (26, 28) verlaufender Wulst (30, 32) am Schmutzfängerelement (22, 24) ausgeformt ist.

4. Schmutzfänger nach wenigstens einem der vorhergehenden Ansprüche, **dadurch gekennzeichnet, dass** das Schmutzfängerelement (22, 24) mindestens eine Öffnung (46, 48) zur Ineingriffnahme eines mit dem Radkasten (38) verbindbaren Sicherungselements (50, 52) aufweist.

5. Schmutzfängeranordnung, bestehend aus einer an einem Radkasten (38) anbringbaren Kederschiene (40, 42) sowie einem darin aufgenommenen Schmutzfänger (14) nach wenigstens einem der vorhergehenden Ansprüche.
